# EUROPEAN PATENT SPECIFICATION

(11) **EP 2 120 401 B1**
(45) Date of publication and mention of the grant of the patent: **21.09.2011**
(21) Application number: 08156400.7
(22) Date of filing: 16.05.2008
(51) Int. Cl.: H04L 12/56

(54) **Method and system for transmitting data-packages in a network**
Verfahren und System zum Übertragen von Datenpaketen in einem Netzwerk
Procédé et système pour transmettre des paquets de données dans un réseau

(43) Date of publication of application: 18.11.2009
(73) Proprietor: Smartdutch B.V., 1016 DS Amsterdam (NL)
(72) Inventor: van Kempen, Gert, 1016 DS Amsterdam (NL)
(74) Representative: Van Breda, Jacobus

(56) References cited:
- EP-A1- 2 120 401
- US-A- 5 173 689
- US-A1- 2001 032 271
- US-A1- 2003 076 840
- US-A1- 2005 080 869
- US-A1- 2005 265 370
- US-B1- 6 680 943

## Description

The invention relates to a method for transmitting at least one data-package in a network comprising nodes and information channels connecting the nodes, and wherein each node is capable to send and to receive such a data-package and wherein there is a source-node from which a data-package originates and a destination-node at which said data-package is addressed, which destination-node returns to the source-node an acknowledgement of receipt-signal upon receipt of said data-package, wherein the source-node monitors the time elapsed since it sent the data-package and its receiving said acknowledgement-of-receipt-signal, whereby the source-node repeats the sending of the data-package if said time elapsed exceeds a predetermined time-limit.

Such a method is generally known and is used for instance for establishing facsimile traffic in a telephone network. Generally speaking, such a telephone network can be considered a system for transmitting at least one data-package in a network comprising nodes and information channels connecting the nodes, wherein each node is capable to send and to receive such a data-package and wherein there is a source-node from which the data-package originates and a destination-node to which the data-package is addressed, wherein there is a plurality of intermediate nodes that the data-package may pass when transmitting from the source-node to the destination-node.

It is expressly remarked that the invention relates to a method and a system which is not confined to a telephone network but relates to a network in general, having nodes that are mutually connected through wireless or wired information channels. Particularly, when the information channels are wireless there may be a problem in that the data-packages sent by any source node may not always or not always undisruptedly arrive at its destination node.

It is an aim of the invention to develop in such a situation alternative routes for the data-package to arrive at its destination node without however sacrificing too much of the network's capacity to deal with a certain load of data traffic.

A method and system in accordance with the preambles of claims 1 and 4, respectively is known from US2005/0265370.

The method and the system of the invention are characterized by one or more of the appended claims.

As a first aspect of the invention the method for transmitting a data-package in such a network wherein the destination node returns an acknowledgement-of-receipt-signal to the source node when it receives a data-package,
wherein when the acknowledgement-of-receipt-signal is received within the predetermined time limit, a next sending of a further data-package will seek to follow said path, and
wherein when the acknowledgement-of-receipt-signal exceeds said predetermined time-limit the source node will repeat the sending of said data-package and will select a first condition enabling all intermediate nodes to receive and/or send any such data-package,
has the characterizing features that the acknowledgement-of-receipt-signal comprises the path followed by the data-package from the source code to the destination node, including if applicable each intermediate node that the data-package has passed, and
that the first condition causes each intermediate node that the data-package actually passes to add information identifying each such intermediate node to the data-package to form part of the path followed by said data-package until it arrives at the destination node,
that when the acknowledgement of receipt-signal is received within the predetermined time limit, the source-node will select a second condition disabling the intermediate nodes not forming part of the path included in the data-package sent by the source node to receive and/or send said data-package,
and that each node at which the data-package arrives for a second or subsequent time prevents its being sent further.

By these features it is possible for the network itself to look for an alternative route for the data-package which initially did not arrive in time at its destination node. Any further data-package that is sent will then seek to follow that path that has proofed to be a feasible route from the source node to the destination node, whist providing a limitation of unnecessary data-traffic that might otherwise occur in the system and network of the invention. Further it is secured that any data-package experiencing difficulty in finding its way from the source node to the destination node is removed from the system so as to avoid that such data-package remains unsuccessfully looking for a way to the destination node, which would absorb a certain amount of the capacity of the system without resulting however that the data-package arrives at its destination node in a reasonable time.

It has been found advantageous that the selection of the first condition and/or the second condition occurs by selecting a digital switch position that forms part of the data-package. It is thus the data-package itself that determines whether it may be received and retransmitted by a particular intermediate node or that same is prevented. The receipt and retransmitting of the data-package occurs through a prior path that is thus part of the same data-package and that has proofed to be a feasible connection between the source node and the destination node.

Further the method of the invention can effectively be implemented by the feature that the path followed by any data-package is registered in a routing table that forms part or may form part of said data-package.

In accordance with the method of the invention as discussed above, the invention also relates to a system in which the operability of the intermediate nodes is depending on the position of a digital switch included in the data-package, such that at each intermediate node at which a data-package arrives it is decided whether it may or may not operate on this data-package by receiving it and/or resending it depending on the position of the switch included in the data-package, wherin the digital switch is operable by the source-node depending on its receipt of an acknowledgement-of-receipt-signal within a predetermined time limit or exceeding said time-limit, concerning an earlier sent data-package received or to be received at the destination-node. In this way the fact whether or not the earlier sent data-package arrives within time or by exceeding a certain time span determines how the operation of the system will be with any further sent data-packages that immediately follow this earlier sent data-package.

The system of the invention is embodied such that the source node places the digital switch in a first position enabling the intermediate nodes to receive and/or send the data-package with said switch in the first position if the source-node has failed to receive an acknowledgement-of-receipt-signal within a predetermined time-limit concerning an earlier sent data-package,
and furthermore that if the source-node has received an acknowledgement-of-receipt-signal concerning an earlier sent data-package within a predetermined time-limit, the source-node places the digital switch in a second position disabling all intermediate nodes that are excluded from a path of intermediate nodes connecting the source-node to the destination-node to receive and/or send said data-package and enabling all nodes that are included in said path to receive and/or send said data-package,
and that each node at which the data-package arrives for a second or subsequent time prevents its being sent further.

The invention will hereinafter be further elucidated with reference to a schematic exemplary embodiment of the system of the invention and with reference to the drawing.

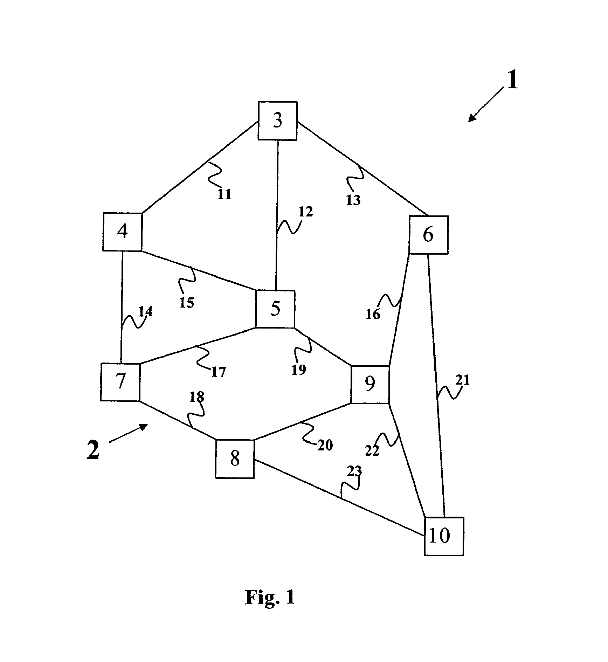

In the drawing a single figure 1 shows a system 1 for transmitting a data-package or data-packages in a network 2 comprising nodes 3-10 and information channels 11-23 connecting the nodes 3-10 wherein each node is capable to send and to receive any such data-packages.

Each of the nodes 3-10 may serve as a source node, for instance the source node may as an example be represented by node 3. From this source node 3 the data-package originates and it has to arrive at a destination node which may again be any of the other nodes 4-10 but for this example may be represented by node 10.

The data-package may either arrive at the destination node 10 from the source node 3 directly, that is without passing any intermediate node 4-9 or may have to pass, depending on the circumstances, one or more of the intermediate nodes 4-9. Upon the arrival at the destination node 10 of the data-package sent by the source node 3, the destination node 10 sends an acknowledgement-of-receipt-signal comprising the path that is followed by the data-package from the source node 3 to the destination node 10 including, if applicable, each intermediate node 4-9 that the data-package has passed for that purpose. The path may therefore indicate either that the data-package arrived at the destination node 10 without passing any intermediate node 4-9 or may indicate for instance that the package arrived at the destination node 10 via intermediate nodes 4, 7 and 8 before arriving at destination node 10.

Upon its sending of a data-package the source node 3 monitors the time that elapses until it receives the mentioned acknowledgement-of-receipt-signal from the destination node 10.

The system 1 operates further as follows: When the acknowledgement-of-receipt-signal is received by the source node 3 within a predetermined time limit the first sending of a next data-package by the source node 3 will seek to follow the same path which has proven to be a feasible and timely connection between the source node 3 and the destination node 10.

When however the acknowledgement-of-receipt-signal does not arrive within the predetermined time limit, the source node 3 will repeat the sending of the data-package which has failed to timely arrive at the destination node 10, and said source node 3 will select a first condition that enables all intermediate nodes 4-9 to receive and/or send any such data-package, which condition also causes each intermediate node (in this example nodes 4, 7 and 8) that the data-package actually passes, to add information identifying each such intermediate node 4, 7, 8 to the data-package to form part of the path followed by said data-package until it arrives at the destination node 10. The acknowledgement-of-receipt-signal that is thereafter returned by the destination node 10 to the source node 3 includes said path setting forth the intermediate nodes 4, 7 and 8.

Further, when the acknowledgement-of-receipt-signal as sent by the destination node 10 is received by the source node 3 within the predetermined time limit the source node 3 will select a second condition that disables the intermediate nodes 5, 6 and 9 that did not form part of the path included in the data-package sent by the source node 3, thus disabling these intermediate nodes 5, 6 and 9 to receive and/or send said data-package.

The said first condition and second condition are recognizable by all the intermediate nodes 4-9 by the fact that a digital switch position indicates this condition, which switch position forms part of the data-package. Furthermore, the path that is actually followed by each data-package is registered in such data-package in a routing table that forms part thereof.

From the foregoing it is clear that the operability of the intermediate nodes 4-9 is depending on the position of said digital switch that is included in the data-packages that are sent from the source node 3 to the destination node 10.

With the aforesaid selection of the second condition that disables the intermediate nodes 5, 6 and 9 that do not form part of the path via intermediate nodes 4, 7 and 8, the system 1 is placed in a condition that causes that the next data-package to be sent by the source node 3 will seek to follow the same path from source node 3 via intermediate nodes 4, 7 and 8 to destination node 10. If again the acknowledgement-of-receipt-signal to be sent by the destination node 10 exceeds the predetermined time limit monitored by the source node 3, the source node 3 will repeat the sending of the concerning data-package however with the digital switch placed in a position corresponding to the first condition that again enables all intermediate nodes 4-9 to receive and/or send this data-package. This allows the system 1 to find an alternative route from source node 3 to destination node 10 which will suit the requirements as to the allowable traffic time. By the feature that each node at which the data-package arrives for a second or subsequent time, prevents its being sent further, it is secured that any such data-packages that do not succeed in managing to find a feasible route from source node 3 to destination node 10 will be removed from the system 1 without further use of the system's capacity.

## Claims

1. Method for transmitting at least one data-package in a network comprising nodes and information channels connecting the nodes, and wherein each node is capable to send and to receive such a data-package and wherein there is a source-node from which a data-package originates and a destination-node at which said data-package is addressed;
which destination-node returns to the source-node an acknowledgement of receipt-signal upon receipt of said data-package, wherein the source-node monitors the time elapsed since it sent the data-package and its receiving said acknowledgement-of-receipt-signal;
wherein when the acknowledgement-of-receipt-signal is received within the predetermined time limit, a next sending of a further data-package will seek to follow said path;
and wherein the source-node repeats the sending of the data-package if said time elapsed exceeds a predetermined time-limit and will select a first condition enabling all intermediate nodes to receive and/or send any such data-package,
**characterized in that** the acknowledgement-of-receipt-signal comprises the path followed by the data-package from the source node to the destination node, including if applicable each intermediate node that the data-package has passed;
that the first condition causes each intermediate node that the data-package actually passes to add information identifying each such intermediate node to the data-package to form part of the path followed by said data-package until it arrives at the destination node, and that the acknowledgement-of-receipt-signal is returned to the source-node including said path;
that when the acknowledgement of receipt-signal is received within the predetermined time limit, the source-node will select a second condition disabling the intermediate nodes not forming part of the path included in the data-package sent by the source node to receive and/or send said data-package;
and that each node at which the data-package arrives for a second or subsequent time prevents its being sent further.

2. Method according to claim 1, **characterized in that** the selection of the first condition and/or the second condition occurs by selecting a digital switch position that forms part of the data-package.

3. Method according to anyone of claims 1-2, **characterized in that** the path followed by any data-package is registered in a routing table that forms part or may form part of said data-package.

4. System (1) for transmitting at least one data-package in a network (2) comprising nodes (3-10) and information channels (11-23) connecting the nodes (3-10);
wherein each node is capable to send and to receive such a data-package and wherein there is a source-node (3-10) from which the data-package originates and a destination-node (3-10) to which the data-package is addressed;
wherein there is a plurality of intermediate nodes (3-10) that the data-package may pass when transmitting from the source-node (3-10) to the destination-node (3-10), and wherein the operability of the intermediate nodes is depending on the position of a digital switch included in the data-package;
wherein the digital switch is operable by the source-node depending on its receipt of an acknowledgement-of-receipt-signal within a predetermined time limit or exceeding said time-limit, concerning an earlier sent data-package received or to be received at the destination-node;
**characterized in that**
the source node places the digital switch in a first position enabling the intermediate nodes to receive and/or send the data-package with said switch in the first position, if the source-node has failed to receive an acknowledgement-of-receipt-signal within a predetermined time-limit concerning an earlier sent data-package;
that if the source-node has received an acknowledgement-of-receipt-signal concerning an earlier sent data-package within a predetermined time-limit, the source-node places the digital switch in a second position disabling all intermediate nodes that are excluded from a path of intermediate nodes connecting the source-node to the destination-node, to receive and/or send said data-package and enabling all nodes that are included in said path to receive and/or send said data-package;
and that each node at which the data-package arrives for a second or subsequent time prevents its being sent further.

## Patentansprüche

1. Verfahren zum Übertragen von mindestens einem Datenpaket in einem Netzwerk mit Knoten und Informationskanälen, welche die Knoten verbinden, wobei jeder Knoten dazu geeignet ist, ein solches Datenpaket zu senden und zu empfangen, wobei es einen Quellknoten, von welchem ein Datenpaket herstammt, und einen Zielknoten gibt, zu dem ein Datenpaket gerichtet wird;
wobei der Zielknoten eine Bestätigung an den Quellknoten bezüglich einer Empfangsbestätigung bei Empfang des Datenpaketes richtet, wobei der Quellknoten die verstrichene Zeit von der Versendung des Datenpaketes bis zum Empfangen der Empfangsbestätigung überprüft;
wobei, wenn die Empfangsbestätigung innerhalb der vorbestimmten Zeitbeschränkung empfangen wird, ein nächstes Senden eines weiteren Datenpaketes demselben Pfad folgend vorgenommen wird; und
wobei der Quellknoten das übertragen des Datenpaketes wiederholt, falls die verstrichene Zeit die vorbestimmte Zeitbeschränkung überschreitet, und eine erste Bedingung auswählt, um es zwischengeschalteten Knoten zu erlauben, solche Datenpakete zu senden und/oder zu empfangen;
**dadurch gekennzeichnet,**
**dass** die Empfangsbestätigung den von dem Datenpaket auf dem Weg von dem Quellknoten zu dem Zielknoten genommenen Pfad umfasst, gegebenenfalls einschließlich jedes zwischengeschalteten Knotens, der von dem Datenpaket passiert wurde;
**dass** die erste Bedingung jeden zwischengeschalteten Knoten, den das Datenpaket passiert, dazu veranlasst, dem Datenpaket Informationen zur Identifikation des jeweiligen zwischengeschalteten Knotens hinzuzufügen, um Teil des Pfades zu bilden, den das Datenpaket bis zum Erreichen des Zielknotens nimmt, und dass die Empfangsbestätigung einschließlich des Pfades zu dem Quellknoten zurückgesendet wird; und
**dass**, wenn die Empfangsbestätigung in der vorbestimmten Zeit empfangen wird, der Quellknoten eine zweite Bedingung auswählt, um diejenigen zwischengeschalteten Knoten, welche nicht einen Teil des Pfades bilden, der in dem von dem Quellknoten gesendeten Datenpaket hinzugefügt ist, für das Senden und/oder das Empfangen des Datenpaketes zu sperren; und
**dass** jeder Knoten, bei welchem das Datenpaket zum zweiten oder einem nachfolgenden Mal ankommt, ein weiteres Versenden des Datenpakets verhindert.

2. Verfahren nach Anspruch 1, **dadurch gekennzeichnet, dass** das Auswählen der ersten Bedingung und/oder der zweiten Bedingung durch ein Auswählen einer Position eines digitalen Schalters vorgenommen wird, welcher Teil des Datenpaketes ist.

3. Verfahren nach einem der Ansprüche 1-2, **dadurch gekennzeichnet, dass** der von den Datenpaketen genommene Pfad in einer Routing-Tabelle festgeschrieben wird, welche Teil des Datenpaketes ist oder sein kann.

4. System (1) zur Übertragung von mindestens einem Datenpaket in einem Netzwerk (2) mit Knoten (3-10) und Informationskanälen (11-23), welche die Knoten (3-10) verbinden;
wobei jeder Knoten (3-10) in der Lage ist, ein solches Datenpaket zu senden und zu empfangen, wobei es einen Quellknoten (3-10), von welchem ein Datenpaket ausgeht, und einen Zielknoten (3-10) gibt, zu welchem ein Datenpaket gerichtet wird;
wobei es eine Vielzahl von zwischengeschalteten Knoten (3-10) gibt, welche von dem Datenpaket bei der Übertragung von dem Quellknoten (3-10) zu dem Zielknoten (3-10) überschritten werden können, und wobei die Funktionsfähigkeit der zwischengeschalteten Knoten (3-10) von einer Position eines digitalen Schalters abhängt;
wobei der digitale Schalter durch den Quellknoten in Abhängigkeit des Zugangs der Empfangsbestätigung innerhalb der vorbestimmten Zeitbeschränkung oder einer Überschreitung der Zeitbeschränkung hinsichtlich eines zuvor gesendeten und zu empfangenden oder von einem Zielknoten zu empfangenden Datenpaketes steuerbar ist;
**dadurch gekennzeichnet,**
**dass** der Quellknoten den digitalen Schalter in eine ersten Position schaltet, um es den zwischengeschalteten Knoten zu ermöglichen, Datenpakete, die den digitalen Schalter in der ersten Position aufweisen, zu empfangen und/oder zu versenden, falls der Quellknoten keine Empfangsbestätigung innerhalb einer vorbestimmten Zeitbeschränkung hinsichtlich eines zuvor versendeten Datenpaketes empfangen hat;
**dass**, wenn der Quellknoten eine Empfangsbestätigung hinsichtlich eines zuvor versendeten Datenpaketes innerhalb einer vorbestimmten Zeitbeschränkung empfangen hat, der Quellknoten den digitalen Schalter in eine zweite Position schaltet, um alle diejenigen zwischengeschalteten Knoten, welche von dem Pfad der zwischengeschalteten Knoten, die den Quellknoten mit dem Zielknoten verbinden, für das Empfangen und/oder das Senden zu sperran, und um alle diejenigen zwischengeschalteten Knoten, welche in dem Pfad enthalten sind, dazu zu veranlassen, das Datenpaket zu empfangen und/oder zu versenden; und
**dass** jeder Knoten, bei welchem das Datenpaket zum zweiten oder einem nachfolgenden Mal ankommt, ein weiteres Versenden des Datenpaketes verhindert.

## Revendications

1. Procédé de transmission d'au moins un paquet de données sur un réseau comprenant des noeuds et des canaux d'information qui relient les noeuds, dans lequel chaque noeud est capable d'émettre et de recevoir un tel paquet de données et dans lequel il existe un noeud de source d'où provient un paquet de données et un noeud de destination auquel ledit paquet de données est adressé ;
dans lequel ledit noeud de destination renvoie au noeud de source un signal d'accusé de réception à réception dudit paquet de données, dans lequel le noeud de source surveille le temps écoulé entre l'instant où il a envoyé le paquet de données et la réception du signal d'accusé de réception ;
dans lequel, si le signal d'accusé de réception est reçu dans la limite de temps prédéterminée, le prochain envoi d'un nouveau paquet de données cherchera à suivre ledit trajet ; et
dans lequel le noeud de source répète l'émission du paquet de données si ledit temps écoulé dépasse une limite de temps prédéterminée et sélectionne une première condition autorisant tous les noeuds intermédiaires à recevoir et/ou envoyer un paquet de données quelconque de ce type ;
**caractérise**
**en ce que** le signal d'accusé de réception comprend le trajet suivi par le paquet de données entre le noeud de source et le noeud de destination, y compris le cas échéant tous les noeuds intermédiaires traversés par le paquet de données ;
**en ce que** la première condition commande à chaque noeud intermédiaire réellement traversé par le paquet de données d'ajouter au paquet de données des informations qui identifient ledit noeud intermédiaire afin de faire partie du trajet suivi par ledit paquet de données, jusqu'à ce qu'il arrive au noeud de destination et en ce que le signal d'accusé de réception est renvoyé au noeud de source en comprenant ledit trajet ;
**en ce que**, lorsque le signal d'accusé de réception est reçu dans la limite de temps prédéterminée, le noeud de source sélectionne une seconde condition qui interdit aux noeuds intermédiaires qui ne font pas partie du trajet inclus dans le paquet de données envoyé par le noeud de source de recevoir et/ou d'envoyer ledit paquet de données ; et
**en ce que** chacun des noeuds auquel le paquet de données arrive pour une seconde fois ou plus empêche qu'il ne soit renvoyé.

2. Procédé selon la revendication 1, **caractérisé en ce que** 1a sélection de la première condition et/ou de la seconde condition s'effectue en sélectionnant la position d'un commutateur numérique qui fait partie du paquet de données.

3. Procédé selon l'une quelconque des revendications 1 et 2, **caractérisé en ce que** le trajet suivi par un paquet de données quelconque est enregistré dans une table de routage qui fait partie ou peut faire partie dudit paquet de données.

4. Système (1) destiné à transmettre au moins un paquet de données sur un réseau (2) comprenant des noeuds (3 à 10) et des canaux d'information (11 à 23) qui relient les noeuds (3 à 10) ;
dans lequel chaque noeud est capable d'émettre et de recevoir un tel paquet de données et dans lequel il existe un noeud de source (3-10) d'où provient le paquet de données et un noeud de destination (3-10) auquel ledit paquet de données est adressé ;
dans lequel il existe une pluralité de noeuds intermédiaires (3 à 10) qui peuvent être traversés par le paquet de données lorsque celui-ci est transmis du noeud de source (3 à 10) vers le noeud de destination (3 à 10) et dans lequel le fonctionnement des noeuds intermédiaires dépend de la position d'un commutateur numérique inclus dans le paquet de données ;
dans lequel le commutateur numérique peut être actionné par le noeud de source en fonction de la réception d'un signal d'accusé de réception dans une limite de temps prédéterminée ou en dehors de ladite limite de temps à propos d'un paquet de données envoyé auparavant qui a été reçu ou devrait être reçu par le noeud de destination ;
**caractérisé :**
**en ce que** le noeud de source place le commutateur numérique dans une première position qui autorise les noeuds intermédiaires à recevoir et/ou envoyer le paquet de données avec ledit commutateur dans la première position si le noeud de source n'a pas reçu de signal d'accusé de réception dans une limite de temps prédéterminée pour un paquet de données envoyé auparavant ;
**en ce que**, si le noeud de source a reçu un signal d'accusé de réception concernant un paquet de données envoyé auparavant dans une limite de temps prédéterminée, le noeud de source place le commutateur numérique dans une seconde position qui interdit à tous les noeuds intermédiaires qui ne sont pas compris dans un trajet de noeuds intermédiaires connectant le noeud de source au noeud de destination de recevoir et/ou d'envoyer ledit paquet de données et qui autorise tous les noeuds qui sont inclus dans ledit chemin à recevoir et/ou envoyer ledit paquet de données ; et
**en ce que** chacun des noeuds auquel le paquet de données arrive pour une seconde fois ou plus empêche qu'il ne soit renvoyé.
